# EUROPÄISCHE PATENTSCHRIFT

(11) **EP 3 085 557 B1**
(45) Veröffentlichungstag und Bekanntmachung des Hinweises auf die Patenterteilung: **09.05.2018**
(21) Anmeldenummer: 16165709.3
(22) Anmeldetag: 18.04.2016
(51) Int. Cl.: B60G 7/00, B60G 9/00

(54) **VERSTÄRKUNGSEINHEIT**
REINFORCING UNIT
UNITE DE RENFORT

(30) Priorität: 20.04.2015 DE 102015105966
(43) Veröffentlichungstag der Anmeldung: 26.10.2016
(73) Patentinhaber: SAF-HOLLAND GmbH, 63856 Bessenbach (DE)
(72) Erfinder: Borde, Florian, 63599 Biebergemünd (DE); Spielmann, Rolf, 97877 Wertheim-Bettingen (DE); Seitz, Roman, 63849 Niedernberg (DE)
(74) Vertreter: Müller Schupfner & Partner Patent- und Rechtsanwaltspartnerschaft mbB

(56) Entgegenhaltungen:
- DE-A1-102008 061 190
- DE-A1-102012 024 941
- US-A1- 2005 057 013
- US-A1- 2012 080 862
- US-A1- 2013 056 946
- US-A1- 2013 200 588
- US-E- R E30 308

## Beschreibung

Die vorliegende Erfindung betrifft eine Verstärkungseinheit zum Einsatz im Fahrwerksystem eines Nutzfahrzeuges und ein Fahrwerkssystem mit einer solchen Verstärkungseinheit.

Aus dem Stand der Technik sind bereits Fahrwerkssysteme für Nutzfahrzeuge bekannt, bei denen ein Achsrohr mit einem Längslenker des Nutzfahrzeuges verbunden ist, wobei der Verbund zwischen dem Lenkerelement und dem Achsrohr ausgelegt ist, Kräfte, Biegemomente und Torsionsmomente zu übertragen. Dabei hat es sich bewährt, zur Festlegung des Lenkerelements an dem Achsrohr eine Schweißverbindung zwischen Bereichen des Lenkerelements und des Achsrohres auszubilden. Darüber hinaus hat es sich bewährt, Zwischenelemente zwischen dem Lenkerelement und dem Achsrohr anzuordnen und zunächst das Zwischenelement mit dem Achsrohr zu verschweißen und anschließend das Lenkerelement am Zwischenelement festzulegen. Durch die lokalen Beeinträchtigungen der Beschaffenheit des Gefüges des Materials des Achsrohres und des Lenkerelements in dessen Einsatzgebiet, wird die Lebensdauer dieser Verbindung des Achsrohres mit dem Lenkerelement in einer großen Streuung beeinflusst.

Die DE 10 2008 061 190, die den Oberbegriff des Anspruchs 1 offenbart, betrifft eine Achsaufhängung für eine Fahrzeugachse mit einem Achskörper und Achslenkern, welche sich aus mindestens einem in Fahrtrichtung vorderen und mindestens einem in Fahrtrichtung hinteren Lenkerabschnitt zusammensetzen, wobei an beiden Lenkerabschnitten Schalen angeformt sind.

Die US-2013/0056946 A1 betrifft eine Fahrzeugachse, an welcher Lenker über Bolzen, welche sich durch die Achse erstrecken, festgelegt sind.

Aufgabe der vorliegenden Erfindung ist es, eine Verstärkung für die Verbindung zwischen einer Lenkereinheit und einem Achsrohr bereitzustellen, welche einfach zu montieren und auch bei existierenden Nutzfahrzeugen ohne weiteres nachrüstbar ist. Weiterhin ist es Aufgabe der vorliegenden Erfindung, ein Fahrwerkssystem bereitzustellen, welches die Nachteile aus dem Stand der Technik beseitigt.

Diese Aufgaben werden gelöst mit einer Verstärkungseinheit gemäß Anspruch 1 sowie einem Fahrwerkssystem gemäß Anspruch 13. Weitere Vorteile und Merkmale der vorliegenden Erfindung ergeben sich aus den abhängigen Ansprüchen.

Erfindungsgemäß umfasst die Verstärkungseinheit ein erstes Schalenelement und ein zweites Schalenelement, wobei das erste Schalenelement und das zweite Schalenelement je einen rohrseitigen Eingriffsbereich und einen lenkerseitigen Eingriffsbereich aufweisen, wobei das erste Schalenelement und das zweite Schalenelement jeweils einen Flanschabschnitt aufweisen, wobei zwischen dem Flanschabschnitt des ersten Schalenelements und dem Flanschabschnitt des zweiten Schalenelements eine Zugkraft, bzw. Vorspannkraft aufbringbar ist, welche das erste und das zweite Schalenelement gegen ein Achsrohr presst, derart, dass die Verstärkungseinheit kraftschlüssig am Achsrohr festlegbar ist, wobei der lenkerseitige Eingriffsbereich mit einer Lenkereinheit in Eingriff bringbar ist. Das erste Schalenelement und das zweite Schalenelement sind vorzugsweise derart ausgebildet und zueinander angeordnet, dass sie das Achsrohr im Wesentlichen umschlingen. Dabei weisen die Schalenelemente jeweils einen Flanschabschnitt auf, welcher dazu ausgelegt ist, in diesen Flanschabschnitt eine Zugkraft, bzw. Vorspannkraft zu etablieren, welche die Schalenelemente gegen das Achsrohr presst. Jedes der Schalenelemente weist einen rohrseitigen Eingriffsbereich auf, welcher vorzugsweise eine zur Außengeometrie des Achsrohres korrespondierende Geometrie aufweist. Auf diese Weise kann nach Herstellung des Kraftschlusses zwischen dem ersten Schalenelement und dem zweiten Schalenelement, welcher die Schalenelemente gegen das Achsrohr presst, vorzugsweise ein möglichst großflächiger Reibschluss zwischen dem jeweiligen rohrseitigen Eingriffsbereich und dem Achsrohr hergestellt werden. Benachbart zum rohrseitigen Eingriffsbebereich weist jedes Schalenelement einen lenkerseitigen Eingriffsbereich auf, wobei der lenkerseitige Eingriffsbereich mit einer Lenkereinheit kraftschlüssig in Eingriff bringbar ist. Durch den kraftschlüssigen Eingriff sowohl mit der Lenkereinheit, als auch mit dem Achsrohr, verstärkt die Verstärkungseinheit somit die Verbindung zwischen der Lenkereinheit und dem Achsrohr. Da die Verstärkungseinheit am Achsrohr und an der Lenkereinheit vorzugsweise nur kraft- bzw. reibschlüssig festgelegt ist, lässt sie sich ohne weiteres nachträglich an eine bereits vorhandene Baugruppe bestehend aus einem Achsrohr und einer Lenkereinheit anfügen oder wieder demontieren, um die unter der Verstärkungseinheit liegenden Bereiche inspizieren zu können. Es versteht sich hierbei, dass sowohl der rohrseitige Eingriffsbereich, als auch der lenkerseitige Eingriffsbereich in seinen Abmessungen jeweils an die gegenüberliegende Geometrie der Lenkereinheit oder des Achsrohres angepasst ist und vorzugsweise im Wesentlichen die identische Geometrie aufweist. Durch den Einsatz einer Verstärkungseinheit kann somit die Schnittstelle zwischen dem Achsrohr und der Lenkereinheit derart verstärkt werden, dass vorzugsweise weiterhin zwischen der Lenkereinheit und dem Achsrohr vorgesehene Schweißverbindungen entlastet sind. Auf diese Weise lässt sich die Lebensdauer der Schnittstelle zwischen einem Achsrohr und einer Lenkereinheit mithilfe der Verstärkungseinheit signifikant erhöhen.

Vorzugsweise sind das erste Schalenelement und das zweite Schalenelement im jeweiligen rohrseitigen Eingriffsbereich gegen das Achsrohr vorgespannt, wobei die Verstärkungseinheit gegen Verlagerung relativ zum Achsrohr entlang einer Axialrichtung gesichert ist. Durch die Vorspannung der beiden Schalenelemente gegen das Achsrohr ist insbesondere bevorzugt ein Reibschluss zwischen den jeweiligen rohrseitigen Eingriffsbereichen und dem Achsrohr herstellbar. Dieser Reibschluss sichert die Verstärkungseinheit vorzugsweise zumindest gegen Verlagerung relativ zum Achsrohr entlang einer Axialrichtung. Die Axialrichtung ist dabei vorzugsweise die Längserstreckungsrichtung bzw. die Haupterstreckungsrichtung des Achsrohres. Bei einem hohlzylinderförmig ausgebildeten Achsrohr ist die Axialrichtung vorzugsweise die Zylinderachse. Durch die Sicherung der Verstärkungseinheit gegen Verlagerung relativ zum Achsrohr entlang der Axialrichtung soll insbesondere gewährleistet werden, dass der lenkerseitige Eingriffsbereich der jeweiligen Schalenelement der Verstärkungseinheit stets in Eingriff mit einer entsprechend gegenüberliegenden Eingriffsgeometrie der Lenkereinheit gehalten wird. Zusätzlich zur Sicherung der Verstärkungseinheit gegen Verlagerung relativ zum Achsrohr kann vorzugsweise auch ein Eingriffsbereich zwischen der Lenkereinheit und der Verstärkungseinheit vorgesehen sein, welcher das erste und/oder das zweite Schalenelement gegen Verlagerung relativ zur Lenkereinheit längs der Axialrichtung sichert.

Erfindungsgemäß ist der lenkerseitige Eingriffsbereich mit einem Kragen der Lenkereinheit kraftschlüssig in Eingriff bringbar, wobei vorzugsweise der lenkerseitige Eingriffsbereich den Kragen gegen das Achsrohr presst. Insbesondere bevorzugt weist die Lenkereinheit somit einen Kragen auf, der mit anderen Worten ein vorzugsweise um das Achsrohr herum verlaufender Vorsprung ist, in welchen der lenkerseitige Eingriffsbereich vorzugsweise kraftschlüssig eingreift. Der Kragen kann dabei vorzugsweise zusätzlich eine Geometrie aufweisen, die eine Hinterschneidung mit dem lenkerseitigen Eingriffsbereich zulässt. Die Hauptkraftrichtung, mit der der lenkerseitige Eingriffsbereich des jeweiligen Schalenelements auf den Kragen einwirkt, verläuft dabei vorzugsweise im Wesentlichen längs der um die bzw. senkrecht zur Axialrichtung verlaufenden Radialrichtung. Auf diese Weise presst der lenkerseitige Eingriffsbereich den Kragen gegen das Achsrohr, um auf diese Weise vorzugsweise eine Schweißverbindung zwischen der Lenkereinheit und dem Achsrohr zu unterstützen.

Besonders bevorzugt stützt der Eingriff des lenkerseitigen Eingriffsbereiches am Kragen und des rohrseitigen Eingriffsbereiches am Achsrohr die Lenkereinheit gegenüber dem Achsrohr ab, um eine zwischen der Lenkereinheit und dem Achsrohr hergestellte Schweißverbindung zu entlasten. Mit anderen Worten überträgt somit die Verstärkungseinheit zwischen dem lenkerseitigen und dem rohrseitigen Eingriffsbereich jeweils eine Kraft, welche zwischen der Lenkereinheit und dem Achsrohr wirkt. Auf diese Weise nimmt die Verstärkungseinheit einen Teil der Kräfte und Momente auf, die zwischen der Lenkereinheit und dem Achsrohr wirken. Diese Kräfte und Momente resultieren insbesondere aus Gewichtskräften des Nutzfahrzeugs, aus Biegemomenten aufgrund von Hebelarmen an der Lenkereinheit, der Radaufhängung und weiteren Anbindungspunkten im Fahrwerkssystem des Nutzfahrzeuges, und aus Torsionsmomenten, die insbesondere bei Bremsvorgängen auf das Achsrohr und die Lenkereinheit wirken. Es kann dank der Verstärkungseinheit insbesondere die Verbindung des gesamten Fahrwerkssystems deutlich erhöht werden, da die gegenüber Rissbildung und daraus resultierenden Spröd- oder Kriechbrüchen empfindlichere Schweißverbindung zwischen dem Achsrohr und der Lenkereinheit durch die Verstärkungseinheit entlastet wird.

Insbesondere bevorzugt ist die Verbindung der Flanschabschnitte lösbar, wobei bevorzugt eine Vielzahl von Bolzen oder Befestigungsmitteln vorgesehen ist, um eine Zugkraft, bzw. Vorspannkraft zwischen zwei gegenüberliegenden Flanschabschnitten herzustellen. Der große Vorteil der vorliegenden Erfindung ist, dass die Verstärkungseinheit auf einfache Weise an ein Fahrwerkssystem montierbar und auch wieder von diesem demontierbar ist. Es kann auf diese Weise zu Wartungszwecken und zur Untersuchung der Verbindungszone zwischen der Lenkereinheit und dem Achsrohr, die Verstärkungseinheit von dem Fahrwerkssystem demontiert werden und anschließend mit nur wenigen Arbeitsschritten wieder an dem Fahrwerkssystem montiert werden. Um dies zu gewährleisten, ist die Verbindung der Flanschabschnitte des ersten und des zweiten Schalenelements eine lösbare Verbindung. Hierbei eignen sich insbesondere bevorzugt Bolzen, welche mit einem Gewinde ausgestattet sind, über welches eine Zugkraft, bzw. Vorspannkraft zwischen zwei gegenüberliegenden Flanschabschnitten hergestellt wird. Weiterhin erlaubt die Verwendung von Bolzen zur Herstellung einer Zugkraft, bzw. Vorspannkraft zwischen zwei gegenüberliegenden Flanschabschnitten auch, dass die Verstärkungseinheit auf sehr einfache Weise an im Fahrwerksbereich, insbesondere im Bereich des Achsrohres und der Lenkereinheit, vorliegende Fertigungstoleranzen angepasst werden kann. Vorzugsweise können durch die Einrichtung eines bestimmten Anzugsmomentes auch für verschiedene Geometrien oder fertigungstolerenzbedingte Abweichungen von einer Standardgeometrie die gleichen Anzugkräfte der Verstärkungseinheit, insbesondere deren Schalenelemente, an das Achsrohr und die Lenkereinheit gewährleistet werden kann.

In einer besonders bevorzugten Ausführungsform weisen die Schalenelemente im Bereich der Flanschabschnitte eine höhere Steifigkeit auf, als in den übrigen, mit dem Achsrohr und/oder der Lenkereinheit in Eingriff stehenden Bereichen. Insbesondere verursacht durch die lokale Materialverdickung im Bereich der Flanschabschnitte sind die Schalenelement im Bereich der Flanschabschnitte steifer, insbesondere verwindungssteifer als die Schalenelemente im Bereich außerhalb der Flanschabschnitte sind. Dieser Effekt kann insbesondere ausgenutzt werden, um die von der Verstärkungseinheit auf das Achsrohr und die Lenkereinheit übertragenen Haltekräfte in bestimmten Bereichen, also vorzugsweise im Bereich der Flanschabschnitte, zu konzentrieren und insbesondere in diesen Bereichen eine hohe Anpressung und Seitenstabilisierung zu erreichen. Indem die Schalenelemente mit einer bestimmten Ausrichtung bezogen auf die Befestigungsgeometrie zwischen der Lenkereinheit und dem Achsrohr an der Lenkereinheit und dem Achsrohr festgelegt werden, können insbesondere Bereiche der Schweißnaht, welche zwischen der Lenkereinheit und dem Achsrohr hergestellt ist, stärker abgestützt werden, als die übrigen Bereiche zwischen dem Achsrohr und der Lenkereinheit. Mit anderen Worten lässt sich durch die höhere Steifigkeit der Flanschabschnitte eine lokal erhöhte Stabilisierung der Verbindung zwischen Lenkereinheit und Achsrohr durch die Verstärkungseinheit erreichen.

Vorzugsweise weist der rohrseitige Eingriffsbereich längs der Axialrichtung eine größere Erstreckung auf, als der lenkerseitige Eingriffsbereich. Diese größere Erstreckung des rohrseitigen Eingriffsbereiches längs der Axialrichtung dient insbesondere dazu, die Verstärkungseinheit hauptsächlich an dem Achsrohr gegen Verlagerung längs oder parallel zur Axialrichtung zu sichern. Auf diese Weise kann insbesondere der lenkerseitige Eingriffsbereich darauf optimiert sein, lediglich eine im Wesentlichen quer oder vorzugsweise senkrecht zur Axialrichtung wirkende Anpresskraft auf die Lenkereinheit auszuüben, während seine Fixierung bezogen auf die Axialrichtung zum überwiegenden Teil durch die den rohrseitigen Eingriffsbereich übernommen wird.

Insbesondere bevorzugt ist die Erstreckung des rohrseitigen Eingriffsbereiches längs der Axialrichtung ein Vielfaches, vorzugsweise ein 3- bis 5-faches der Erstreckung des lenkerseitigen Eingriffsbereiches längs der Axialrichtung. Als Bezugsrichtung längs der Axialrichtung wird vorzugsweise eine Richtung parallel zur Axialrichtung definiert, wobei diese Richtung zum einen durch die Erstreckung des Achsrohres gegeben ist, aber auch durch die Auslegung der Geometrie des rohrseitigen Eingriffsbereiches passend zum Achsrohr ein Merkmal der Verstärkungseinheit ist. Im Rahmen von Versuchen zur vorliegenden Erfindung hat sich gezeigt, dass die Ausbildung der Verstärkungseinheit derart, dass der rohrseitigen Eingriffsbereiche der Schalenelemente eine wesentlich größere Eingriffsfläche mit dem Achsrohr aufweisen, als der lenkerseitige Eingriffsbereich eine Eingriffsfläche mit der Lenkereinheit aufweist, eine besonders hohe Stabilität der Festlegung der Verstärkungseinheit an dem Verbund aus Achsrohr und Lenkereinheit gewährleistet. Gleichzeitig wird dabei der Eingriffsbereich zwischen Verstärkungseinheit und Lenkereinheit möglichst nur minimal mit längs der Axialrichtung wirkenden Kräften beansprucht. Es hat sich dabei gezeigt, dass die beste Verstärkungswirkung erreichbar ist, wenn das Verhältnis der Erstreckung des rohrseitigen Eingriffsbereiches längs der Axialrichtung zur Erstreckung des lenkerseitigen Eingriffsbereiches längs der Axialrichtung größer als 2 ist und besonders bevorzugt zwischen 3 und 5 liegt. Es ist auf diese Weise eine besonders vorteilhafte Verteilung der jeweiligen Kräfte auf die rohrseitigen Eingriffsbereiche und die lenkerseitigen Eingriffsbereiche möglich. Hierbei übernimmt der rohrseitige Eingriffsbereich den Großteil der zur Festlegung der Verstärkungseinheit, und längs der Axialrichtung wirkenden Kraft während der lenkerseitige Eingriffsbereich vorzugsweise hauptsächlich eine quer zur Axialrichtung wirkende Anpresskraft auf die Lenkereinheit ausübt.

Alternativ bevorzugt ist die Erstreckung des rohrseitigen Eingriffsbereichs längs der Axialrichtung ein 2- bis 3,5-faches oder ein 4- bis 6-faches der Erstreckung des lenkerseitigen Eingriffsbereiches. Der Verhältnisbereich von 2 bis 3,5 hat sich in Versuchen der Anmelderin als besonders geeignet für Achsen von Nutzfahrzeug-Trailern erwiesen. Es konnte in diesem Verhältnisbereich das niedrigste Gewicht bei für Nutzfahrzeuganhänger ausreichend fester Verbindung zwischen den Schalenelementen und dem Achsrohr erreicht werden. Der Verhältnisbereich von 4 bis 6 hat sich als vorteilhaft für Zugmaschinen erwiesen, da hier höhere Festigkeitswerte der Verbindung zwischen den Schalenelementen und dem Achsrohr, insbesondere an der oder den Hinterachsen, für eine erhöhte Betriebssicherheit sorgen.

Mit Vorteil weist der lenkerseitige Eingriffsbereich quer zur Axialrichtung eine mittlere radiale Erstreckung auf, welche größer ist als die mittlere radiale Erstreckung des rohrseitigen Eingriffsbereiches quer zur Axialrichtung. Als mittlere radiale Erstreckung wird vorliegend der Mittelwert des radialen Abstandes bezogen auf die Axialrichtung definiert. Weist also der lenkerseitige oder der rohrseitige Eingriffsbereich eine zylinderförmige Erstreckung auf, ist die mittlere radiale Erstreckung vorzugsweise der Radius der zylinderförmigen Geometrie des jeweiligen Eingriffsbereiches. Für den Fall, dass das Achsrohr und somit auch der korrespondierende rohrseitige Eingriffsbereich eine Rechteckform aufweisen, ist die mittlere radiale Erstreckung vorzugsweise der Radius eines Kreises, welcher den Mittelwert der jeweiligen rechteckförmigen Geometrie und deren Abstand von der Axialrichtung aufweist. Der Vorteil einer mittleren radialen Erstreckung des rohrseitigen Eingriffsbereiches, die kleiner ist als die mittlere radiale Erstreckung des lenkerseitigen Eingriffsbereiches, ist, dass sich die Verstärkungseinheit in Richtung der Lenkereinheit auf das Achsrohr und den entsprechenden Eingriffsbereich an der Lenkereinheit aufschieben lässt.

Bevorzugt weist der Kragen eine mittlere radiale Erstreckung quer zur Axialrichtung auf, die größer ist als die mittlere radiale Erstreckung des lenkerseitigen Eingriffsbereiches in einem spannungsfreien Zustand der Verstärkungseinheit. Mit anderen Wort weist somit der Kragen vorzugsweise ein Übermaß gegenüber dem lenkerseitigen Eingriffsbereich des jeweiligen Schalenelements auf, während das Schalenelement in einem spannungsfreien Zustand ist. Als spannungsfreier Zustand wird vorliegend insbesondere der Zustand definiert, in dem die Schalenelemente noch nicht an dem Achsrohr bzw. der Lenkereinheit montiert sind und noch nicht durch die Zugkraft, bzw. Vorspannkraft in den Flanschbereichen elastisch verformt wurden, um mit einer Presspassung an dem Achsrohr und dem Kragen der Lenkereinheit anzugreifen. Durch das Übermaß des Kragens gegenüber dem lenkerseitigen Eingriffsbereich lässt sich durch die bei der Montage erfolgende elastische Verformung des lenkerseitigen Eingriffsbereiches eine gleichmäßige Anpressung des lenkerseitigen Eingriffsbereiches an dem Kragen erreichen. Auf diese Weise ist insbesondere der Kraftschluss zwischen dem lenkerseitigen Eingriffsbereich und dem Kragen der Lenkereinheit verstärkt und es lässt sich neben der unmittelbar in den Flanschabschnitten erzeugten Zugspannung eine gleichmäßigere Zugspannung entlang der Umfangsrichtung der lenkerseitigen Eingriffsbereiche zwischen den jeweiligen Flanschabschnitten erreichen.

In einer besonders bevorzugten Ausführungsform sind der rohrseitige Eingriffsbereich und/oder der lenkerseitige Eingriffsbereich halbzylinderförmig ausgebildet. Es versteht sich dabei, dass die vorliegende halbzylinderförmige Ausbildung der rohrseitigen und/oder der lenkerseitigen Eingriffsbereiche entsprechend einer Außengeometrie des Achsrohres und/oder des Kragens der Lenkereinheit vorgesehen ist. Insbesondere bevorzugt kann der rohrseitige Abschnitt eines Schalenelement halbzylinderförmig ausgebildet sein, um an eine zylinderförmige Rohrachse angepasst zu werden, während der lenkerseitige Eingriffsbereich mit einer von der Halbzylinderform abweichenden Geometrie ausgestattet ist, um an eine beispielsweise rechteckig oder quadratisch ausgebildete Außengeometrie des Kragens der Lenkereinheit angepasst zu sein. Über eine von der Zylinderform abweichende Außengeometrie des Achsrohres und/oder des Kragens der Lenkereinheit lassen sich insbesondere bevorzugt Torsionsmomente auch über einen Formschluss zwischen dem entsprechenden rohrseitigen und/oder lenkerseitigen Eingriffsbereich übertragen, während eine Zylinderform lediglich eine kraftschlüssige Übertragung dieser Momente erlaubt. Der Vorteil der zylinderförmigen Ausbildung des Achsrohres und/oder des Kragens der Lenkereinheit ist, dass die Umfangslage der Verstärkungseinheit relativ zum Achsrohr und zur Lenkereinheit frei wählbar ist und somit insbesondere die Flanschabschnitte besonders genau an zwischen der Lenkereinheit und dem Achsrohr vorgesehene Schweißgeometrien bzw. Schweißnähte angepasst werden können.

In einer ferner bevorzugten Ausführungsform weist der lenkerseitige Eingriffsbereich eine lokale Unebenheit auf, wobei sich im Bereich der lokalen Unebenheit die von dem lenkerseitigen Eingriffsbereich auf die Lenkereinheit ausgeübte Anpresskraft von dem Mittelwert der Anpresskraft über die gesamte Kontaktfläche zwischen dem lenkerseitigen Eingriffsbereich und der Lenkereinheit vorzugsweise unterscheidet. Lokale Unebenheiten, wie beispielsweise abgeflachte oder hervorragende Abschnitte, am lenkerseitigen Eingriffsbereich dienen insbesondere zur lokalen Erhöhung der Anpresskraft des lenkerseitigen Eingriffsbereiches auf die Lenkereinheit, insbesondere bevorzugt auf den Kragen der Lenkereinheit. Im Rahmen von Versuchen hat sich gezeigt, dass solche lokalen Spannungserhöhungen oder auch lokale Spannungsverringerungen sich durch entsprechende lokale Rücksprünge an den Eingriffsbereichen die Anpasscharakteristik der Verstärkungseinheit auf die Lenkereinheit besonders gut an die zwischen der Lenkereinheit und dem Achsrohr vorgesehene Schweißnahtgeometrie anpassen lässt und somit die Verstärkungswirkung der Verstärkungseinheit deutlich verbessert werden kann. Durch gezielte Anbringung von lokalen Unebenheiten, wie Vorsprüngen oder lokalen Rücksprüngen, entlang des Umfangs der lenkerseitigen Eingriffsbereiche kann eine bestimmte Verteilung der Anpresskräfte der lenkerseitigen Eingriffsbereiche auf die Lenkereinheit hergestellt werden. Erfindungsgemäß ist ein Fahrwerkssystem vorgesehen, welches ein Achsrohr und eine Lenkereinheit umfasst, wobei das Achsrohr an der Lenkereinheit festgelegt ist, wobei an zwei Seiten der Lenkereinheit jeweils eine Verstärkungseinheit, wie zuvor beschrieben, am Verbindungsbereich zwischen dem Achsrohr und der Lenkereinheit festgelegt ist. Besonders bevorzugt umfasst das Fahrwerkssystem somit zwei Verstärkungseinheiten, von denen jeweils eine an je eine Seite der Lenkereinheit angrenzend an einen Verbindungsabschnitt, in dem vorzugsweise eine Schweißnaht zwischen dem Achsrohr und der Lenkereinheit hergestellt ist, sowohl an dem Achsrohr, als auch an der Lenkereinheit festlegbar ist und somit die Verbindung zwischen Achsrohr und Lenkereinheit verstärkt.

In einer bevorzugten Ausführungsform ist der lenkerseitige Eingriffsbereich mit einem Kragen der Lenkereinheit in kraftschlüssigen Eingriff gebracht oder bringbar, wobei der Kragen an einem Zwischenelement vorgesehen ist, wobei das Zwischenelement zwischen dem Achsrohr und einem Längslenker der Lenkereinheit angeordnet ist. Das Zwischenelement ist vorzugsweise ein aus dem Stand der Technik bekannter ringförmiger Körper, auch als "axle wrap" oder "Achs-Wrap" bekannt, und umschlingt das Achsrohr zumindest bereichsweise und ist besonders bevorzugt über sogenannte Schweißfenster an dem Achsrohr festlegbar. Als Schweißfenster wird in diesem Zusammenhang vorzugsweise eine Aussparung am Zwischenelement definiert, entlang derer eine Schweißnaht zwischen dem Zwischenelement und dem Achsrohr herstellbar ist. Das Zwischenelement wird vorzugsweise wiederum über eine Schweißverbindung an dem Längslenker der Lenkereinheit festgelegt.

Besonders bevorzugt überragt das Zwischenelement den Längslenker längs der Axialrichtung derart, dass das Zwischenelement einen Kragen bildet, an welchem die Verstärkungseinheit und insbesondere bevorzugt der lenkerseitige Eingriffsbereich der Verstärkungseinheit angreifen kann. Besonders bevorzugt ist die Verstärkungseinheit dabei derart ausgelegt, dass sie auch an bereits existierende und bereits zusammengebaute bzw. zusammengeschweißte Verbindungen aus Lenkereinheit und Achsrohr mit einem Zwischenelement, welches derart unter dem Längslenker der Lenkereinheit hervorragt, dass ein Kragen gebildet ist, angreifen kann, um zur nachträglichen Verstärkung dieser bereits existierenden Fahrwerkssysteme eingesetzt zu werden.

Ferner bevorzugt ist zumindest eine Verstärkungseinheit derart an dem Verbund aus Achsrohr und Lenkereinheit angeordnet, dass die Flanschabschnitte benachbart zu einem Verbindungsabschnitt des Zwischenelements mit dem Achsrohr angeordnet sind. Besonders bevorzugt ist es, dass die Flanschabschnitte, welche vorzugsweise eine höhere Steifigkeit aufweisen als der Rest der Schalenelemente der Verstärkungseinheit, auf gleicher Höhe bezogen auf den Umfang bzw. benachbart zu einem Verbindungsabschnitt des Zwischenelements angeordnet sind. Der Verbindungsabschnitt des Zwischenelements ist dabei vorzugsweise ein Schweißfenster, in dem das Zwischenelement mit dem Achsrohr verschweißt ist. Als benachbart zum Verbindungsabschnitt wird im vorliegenden Zusammenhang vorzugsweise definiert, dass die Flanschabschnitte einen möglichst kurzen Abstand zu dem Verbindungsabschnitt des Zwischenelements aufweisen sollen, bzw. bezogen auf die Axialrichtung in gleicher Höhe mit dem Verbindungsabschnitt des Zwischenelements angeordnet sein sollen.

Es versteht sich, dass weitere Merkmale und Vorteile der erfindungsgemäßen Verstärkungseinheit ebenfalls in dem erfindungsgemäßen Fahrwerksystem Anwendung finden können.

Weitere Vorteile und Merkmale der vorliegenden Erfindung ergeben sich aus der nachfolgenden Beschreibung mit Bezug auf die beigefügten Figuren. Es zeigen:
- Fig. 1: eine Draufsicht auf eine bevorzugten Ausführungsform des erfindungsgemäßen Fahrwerkssystems,
- Fig. 2: eine geschnittene Ansicht eines Teils des in Fig. 1 gezeigten Fahrwerkssystems,
- Fig. 3: eine perspektivische Ansicht einer bevorzugten Ausführungsform eines Teils des erfindungsgemäßen Fahrwerkssystems, und
- Fig. 4: eine geschnittene Ansicht der Anordnung einer bevorzugten Ausführungsform der erfindungsgemäßen Verstärkungseinheit an einem Verbund aus Achsrohr und Lenkereinheit.

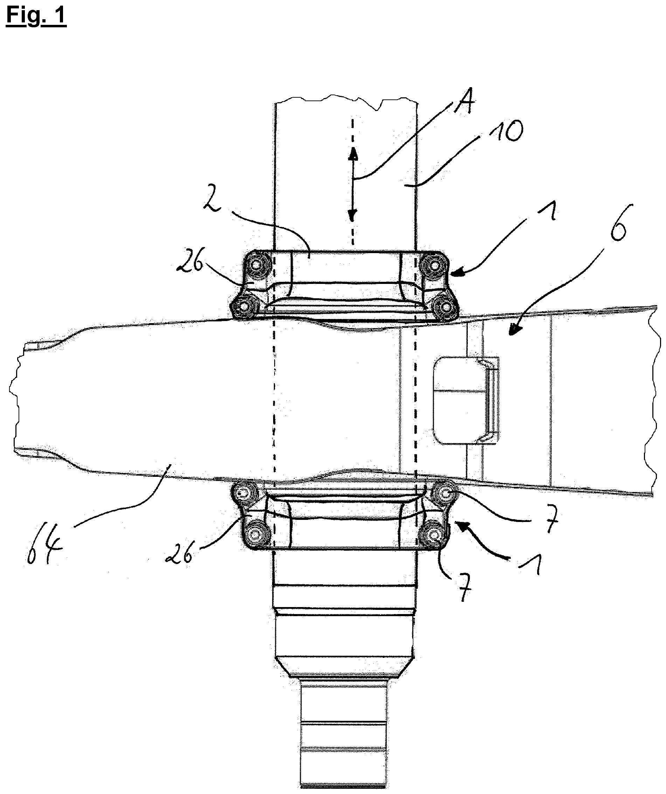

Bei der in Fig. 1 gezeigten Ansicht einer bevorzugten Ausführungsform des erfindungsgemäßen Fahrwerkssystems ist ein Achsrohr 10 gezeigt, welches sich im Wesentlichen längs einer Axialrichtung A erstreckt und einen Verbindungsbereich (gestrichelt dargestellt) mit einer Lenkereinheit 6 bildet. Zur Verstärkung der Verbindung zwischen Achsrohr 10 und Lenkereinheit 6 sind an beiden Seiten der Lenkereinheit 6 jeweils Verstärkungseinheiten 1 angebracht. Dabei ist von beiden Verstärkungseinheiten 1 jeweils nur das erste Schalenelement 2 mit seinen daran ausgebildeten Flanschabschnitten 26 gezeigt. Im Bereich der Flanschabschnitte 26 ist das erste Schalenelement 2 über Bolzen 7 mit einem unteren, zweiten Schalenelement 4 verbunden (in Fig. 1 verdeckt). Über die Bolzen 7 lässt sich zwischen dem oberen, ersten Schalenelement 2 und dem zweiten Schalenelement 4 eine Zugkraft, bzw. Vorspannkraft etablieren, welche eine Anpressung des oberen Schalenelements 2 und des unteren Schalenelements 4 sowohl an das Achsrohr 10, als auch an einen Abschnitt der Lenkereinheit 6 gewährleistet. Von der Lenkereinheit 6 ist in dieser Figur lediglich der Lenkerarm 64 dargestellt, wobei die weiteren Abschnitte der Lenkereinheit 6, wie ein vorzugsweise vorhandenes Zwischenelement 63, und ein mit einem lenkerseitigen Eingriffsbereich 24 (nicht gezeigt) des ersten Schalenelements 2 in Eingriff stehender Kragen 62 (nicht gezeigt), jeweils durch die ersten Schalenelemente 2 verdeckt sind. Alternativ zu der in Fig. 1 gezeigten Darstellung kann das Achsrohr 10 auch zweiteilig ausgebildet sein, wobei der in der unteren Hälfte des Bildes gezeigte Achsstummel quer zur Axialrichtung A bezogen auf den oberen Teil des Achsrohres 10 versetzt angeordnet sein kann. Auch bei diesen Ausführungsformen bietet sich eine Verstärkung der Verbindung der einzelnen Abschnitte des Achsrohres 10 mit der Lenkereinheit 6 durch Verstärkungseinheiten 1 an.

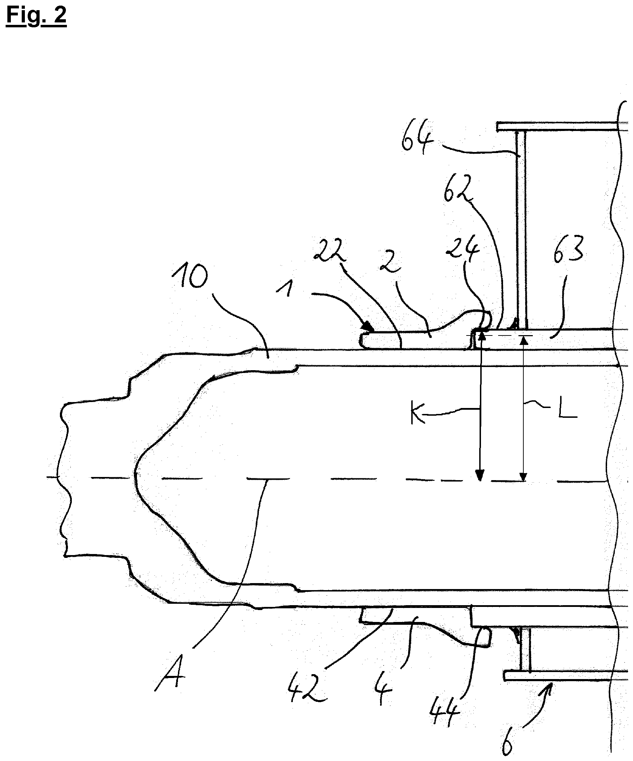

Fig. 2 zeigt eine geschnittene Ansicht einer bevorzugten Ausführungsform des erfindungsgemäßen Fahrwerkssystems, wobei ein Teil des Achsrohres 10 sowie die linke von bevorzugt zwei an der Lenkereinheit 6 angeordnete Verstärkungseinheit 1 dargestellt ist. Das erste Schalenelement 2 weist vorzugsweise einen lenkerseitigen Eingriffsbereich 24 und einen rohrseitigen Eingriffsbereich 22 auf. Analog hierzu weist das zweite Schalenelement 4 einen lenkerseitigen Eingriffsbereich 44 und einen rohrseitigen Eingriffsbereich 42 auf. Die lenkerseitigen Eingriffsbereiche 24, 44 sind derart ausgebildet, dass sie mit einem Kragen 62 der Lenkereinheit 6 in kraftschlüssigen Eingriff gebracht werden können, derart dass der Kraftschluss vorzugsweise entlang der gesamten Fläche der lenkerseitigen Eingriffsabschnitte 24, 44 besteht. Als kraftschlüssiger Eingriff wird dabei insbesondere bevorzugt auch ein unter Vorspannung der lenkerseitigen Eingriffsbereiche 24, 44 gegenüber dem Kragen 62 hergestellter Reibschluss bezeichnet. In einer ersten bevorzugten Ausführungsform kann der Kragen 24 dabei einstückig mit den restlichen Abschnitten der Lenkereinheit 6, wie beispielsweise dem nur schematisch dargestellten Längslenker 64 ausgebildet sein. Bei der in Fig. 2 dargestellten Ausführungsform ist vorzugsweise ein Zwischenelement 63 vorgesehen, welches vorzugsweise über eine Schweißnaht im Bereich des senkrechten Stoßes des Lenkerarms 64 auf dem Zwischenelement 63 festgeschweißt ist. Weiterhin weist das Zwischenelement 63 vorzugsweise einen nicht gezeigten Verbindungsabschnitt 66 auf, welcher bevorzugt als Schweißfenster ausgebildet ist und zur stoffschlüssigen Festlegung des Zwischenelements 63 am Achsrohr 10 dient. Die mittlere radiale Erstreckung K des Anschlags ist vorzugsweise größer als die mittlere radiale Erstreckung L des lenkerseitigen Eingriffsbereiches 24, 44 in einem nicht vorgespannten Zustand des jeweiligen Schalenelements 2,4. Dabei ist in Fig. 2 nur der vorgespannte Zustand gezeigt, bei welchem die Schalenelemente 2, 4 derart gegen den Anschlag vorgespannt sind, während die radiale Erstreckung L des lenkerseitigen Eingriffsbereiches 24, 44 nur gestrichelt dargestellt ist.

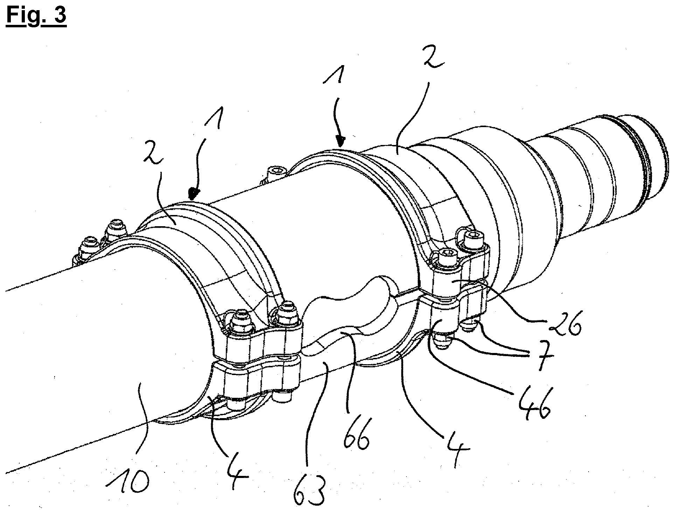

Fig. 3 zeigt eine perspektivische Ansicht einer bevorzugten Ausführungsform des erfindungsgemäßen Fahrwerkssystems, wobei von der Lenkereinheit 6 nur das Zwischenelement 63 gezeigt ist, während die restlichen Teile der Lenkereinheit 6 aus Gründen der Anschaulichkeit nicht dargestellt sind. Das Zwischenelement 63 umschließt das Achsrohr 10 vorzugsweise über dessen annähernd gesamten Umfang und ist im Bereich des Verbindungsabschnitts 66 mit dem Achsrohr 10 verschweißt. Zur Verstärkung der Verbindung zwischen dem Zwischenelement 63 und dem Achsrohr 10 und zur Entlastung der daran vorgesehenen Schweißnähte sind vorzugsweise auf beiden Seiten des Zwischenelements Verstärkungseinheiten 1 vorgesehen. Die Verstärkungseinheiten greifen vorzugsweise mit ihrem jeweiligen lenkerseitigen Eingriffsbereich 24, 44 (nicht gezeigt) in den ebenfalls nicht gezeigten Kragen 62 ein, welcher vorzugsweise an dem Zwischenelement 63 ausgebildet ist. Weiterhin weisen die Verstärkungseinheiten 1 rohrseitige Eingriffsbereiche 22, 42 (nicht gezeigt) auf, welche kraftschlüssig an dem Achsrohr 10 festgelegt sind. Zur Herstellung des Kraftschlusses und zur Vorspannung des jeweils ersten Schalenelements 2 und zweiten Schalenelements 4 der jeweiligen Verstärkungseinheit 1 gegenüber dem Achsrohr 10 und dem Kragen 62, sind Bolzen 7 vorgesehen, über welche eine Zugspannung etablierbar ist. Besonders bevorzugt wird die Zugspannung dabei durch einen Momentenschlüssel in vorausberechneter Größe hergestellt. Es kann auf diese Weise gewährleistet werden, dass innerhalb der Verstärkungseinheiten 1 kein Verzug durch unterschiedliche Zugkraft, bzw. Vorspannkraft in verschiedenen Bolzen 7 verursacht wird. Bei der in Fig. 3 gezeigten Ausführungsform ist weiterhin deutlich erkennbar, dass die Flanschabschnitte 26, 46 der Verstärkungseinheiten 1 jeweils auf Höhe des Verbindungsabschnitts 66 des Zwischenelements 63 angeordnet sind. Mit anderen Worten sind die Verstärkungseinheiten 1 jeweils derart angeordnet, dass die Flanschabschnitte 26, 46 vorzugsweise den geringstmöglichen Abstand zum Verbindungsabschnitt 66 aufweisen. Auf diese Weise kann besonders bevorzugt die erhöhte Steifigkeit des ersten Schalenelements 2 und des zweiten Schalenelements 4 im Bereich der jeweiligen Flanschabschnitte 26, 46 ausgenutzt werden, um den Verbund aus Zwischenelement 63 und Achsrohr 10 insbesondere im Bereich des Verbindungsabschnitts 26 besonders zu versteifen und somit ein Anreißen der Schweißnähte im Verbindungsabschnitt 66 in höchstmöglichem Maße zu verhindern. Es hat sich gezeigt, dass auf diese Weise und mit dieser Anordnung der Verstärkungseinheiten 1 an dem Verbund aus Zwischenelement 63 und Achsrohr 10 die Lebensdauer der gesamten Verbindung zwischen der Lenkereinheit 6 und dem Achsrohr 10 deutlich gesteigert werden kann.

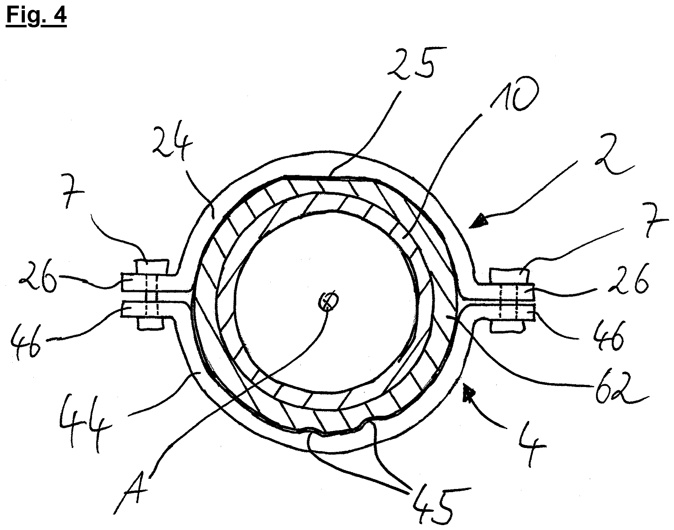

Fig. 4 zeigt eine Schnittansicht des Verbundes des Achsrohres 10 mit einem Kragen 62 einer Lenkereinheit 6 sowie einer daran angeordneten Verstärkungseinheit 1. Beispielhaft ist dabei am ersten Schalenelement 2 der Verstärkungseinheit 1 eine erste bevorzugte Ausführungsform einer lokalen Unebenheit 25 dargestellt. Die lokale Unebenheit 25 kann dabei vorzugsweise als von der Kreis- bzw. Zylinderform abweichende Geometrie ausgebildet sein, die im vorliegenden Beispiel beispielsweise im Wesentlichen eben ausgebildet ist. Alternative Ausführungsformen der lokalen Unebenheit 25, 45 sind am zweiten Schalenelement 4 dargestellt. Dort sind beispielhaft zwei als nasenförmige Vorsprünge ausgeführte lokale Unebenheiten 45 dargestellt, welche jeweils eine punktuelle lokale Erhöhung der Anpressung des lenkerseitigen Eingriffsbereiches 44 auf den Kragen 62 erreichen. Durch gezielte Verteilung solcher lokalen Unebenheiten 25, 45 entlang des Umfangs der Schalenelemente 2, 4 lassen sich besonders bevorzugte Spannungs- bzw. Anpressungscharakteristika erzielen, welche in bevorzugter Weise gezielt Spannungsspitzen in den Schweißverbindungen zwischen der Lenkereinheit 6 und dem Achselement 10 vermeiden können. Es versteht sich, dass die lokalen Unebenheiten 25, 45 vorzugsweise auch als lokale Rücksprünge analog zu den in Fig. 4 gezeigten Vorsprüngen ausgebildet sein können, um lokale Verringerungen der Anpressung durch die lenkerseitigen Eingriffsbereiche 24, 44 der Schalenelemente 2, 4 auf den Kragen 62 zu erreichen.

### Bezugszeichen:

- 1: - Verstärkungseinheit
- 2: - erstes Schalenelement
- 4: - zweites Schalenelement
- 6: - Lenkereinheit
- 7: - Bolzen
- 10: - Achsrohr
- 22: - rohrseitiger Eingriffsbereich
- 24: - lenkerseitiger Eingriffsbereich
- 25: - lokale Unebenheit
- 26: - Flanschabschnitt
- 42: - rohrseitiger Eingriffsbereich
- 44: - lenkerseitiger Eingriffsbereich
- 45: - lokale Unebenheit
- 46: - Flanschabschnitt
- 62: - Kragen
- 63: - Zwischenelement (Axle Wrap)
- 64: - Längslenker
- 66: - Verbindungsabschnitt
- A: - Axialrichtung
- K: - mittlere radiale Erstreckung
- L: - mittlere radiale Erstreckung

## Patentansprüche

1. Verstärkungseinheit (1) zum Einsatz im Fahrwerksystem eines Nutzfahrzeuges umfassend ein erstes Schalenelement (2) und ein zweites Schalenelement (4),
wobei das erste Schalenelement (2) und das zweite Schalenelement (4) je einen rohrseitigen Eingriffsbereich (22, 42) und einen lenkerseitigen Eingriffsbereich (24, 44) aufweisen,
wobei das erste Schalenelement (2) und das zweite Schalenelement (4) jeweils einen Flanschabschnitt (26, 46) aufweisen,
wobei zwischen dem Flanschabschnitt (26) des ersten Schalenelements (2) und dem Flanschabschnitt (46) des zweiten Schalenelements (4) eine Zugkraft aufbringbar ist, welche das erste und das zweite Schalenelement (2, 4) gegen ein Achsrohr (10) derart presst, dass die Verstärkungseinheit (1) kraftschlüssig am Achsrohr (10) festlegbar ist,
**dadurch gekennzeichnet, dass** der lenkerseitige Eingriffsbereich (24, 44) mit einem Kragen (62) der Lenkereinheit (6) in kraftschlüssigen Eingriff bringbar ist.

2. Verstärkungseinheit (1) nach Anspruch 1,
wobei das erste Schalenelement (2) und das zweite Schalenelement (4) im jeweiligen rohrseitigen Eingriffsbereich (22, 42) gegen das Achsrohr (10) vorgespannt sind,
wobei die Verstärkungseinheit (1) gegen Verlagerung relativ zum Achsrohr (10) entlang einer Axialrichtung (A) gesichert ist.

3. Verstärkungseinheit (1) nach einem der vorhergehenden Ansprüche,
wobei der lenkerseitige Eingriffsbereich (24, 44) den Kragen (62) gegen das Achsrohr (10) presst.

4. Verstärkungseinheit (1) nach einem der vorhergehenden Ansprüche,
wobei die Verbindung der Flanschabschnitte (26, 46) lösbar ist,
wobei bevorzugt eine Vielzahl von Bolzen (7) vorgesehen ist, um eine Zugkraft zwischen zwei gegenüberliegenden Flanschabschnitten (26, 46) herzustellen.

5. Verstärkungseinheit (1) nach einem der vorhergehenden Ansprüche,
wobei die Schalenelemente (2, 4) im Bereich der Flanschabschnitte (26, 46) eine höhere Steifigkeit aufweisen als in den übrigen, mit dem Achsrohr (10) und/oder der Lenkereinheit (6) in Eingriff stehenden Bereichen.

6. Verstärkungseinheit (1) nach einem der Ansprüche 2 bis 5,
wobei der rohrseitige Eingriffsbereich (22, 42) längs der Axialrichtung (A) eine größere Erstreckung aufweist als der lenkerseitige Eingriffsbereich (24, 44).

7. Verstärkungseinheit (1) nach einem der Ansprüche 2 bis 6,
wobei die Erstreckung des rohrseitigen Eingriffsbereichs (22, 42) längs der Axialrichtung (A) ein Vielfaches, vorzugsweise ein 3- bis 5-faches der Erstreckung des lenkerseitigen Eingriffsbereiches (24, 44) ist.

8. Verstärkungseinheit (1) nach einem der Ansprüche 2 bis 6,
wobei die Erstreckung des rohrseitigen Eingriffsbereichs (22, 42) längs der Axialrichtung (A) ein 2- bis 3,5-faches oder ein 4- bis 6-faches der Erstreckung des lenkerseitigen Eingriffsbereiches (24, 44) ist.

9. Verstärkungseinheit (1) nach einem der vorhergehenden Ansprüche,
wobei der lenkerseitige Eingriffsbereich (24, 44) quer zur Axialrichtung (A) eine mittlere radiale Erstreckung (L) aufweist, welche größer ist als die mittlere radiale Erstreckung (R) des rohrseitigen Eingriffsbereiches (22, 42) quer zur Axialrichtung (A).

10. Verstärkungseinheit (1) nach den Anspruch 9,
wobei der Kragen (62) eine mittlere radiale Erstreckung (K) quer zur Axialrichtung (A) aufweist, die größer ist als die mittlere radiale Erstreckung (L) des lenkerseitigen Eingriffsbereiches (24, 44) in einem spannungsfreien Zustand der Verstärkungseinheit (1).

11. Verstärkungseinheit (1) nach einem der vorhergehenden Ansprüche,
wobei der rohrseitige Eingriffsbereich (22, 42) und/oder der lenkerseitige Eingriffsbereich (24, 44) halbzylinderförmig ausgebildet ist/sind.

12. Verstärkungseinheit (1) nach einem der vorhergehenden Ansprüche, wobei der lenkerseitige Eingriffsbereich (24, 44) eine lokale Unebenheit (25,45) aufweist, und
wobei sich vorzugsweise im Bereich der lokalen Unebenheit (25, 45) die von dem lenkerseitigen Eingriff (24, 44) auf die Lenkereinheit (6) ausgeübte Anpresskraft von dem Mittelwert der Anpresskraft über die Kontaktfläche zwischen lenkerseitigem Eingriff (24, 44) und der Lenkereinheit (6) unterscheidet.

13. Fahrwerkssystem umfassend ein Achsrohr (10) und eine Lenkereinheit (6),
wobei das Achsrohr (10) an der Lenkereinheit (6) festgelegt ist,
wobei an zwei Seiten der Lenkereinheit (6) jeweils eine Verstärkungseinheit (1) nach einem der Ansprüche 1 bis 11 am Verbindungsbereich zwischen dem Achsrohr (10) und der Lenkereinheit (6) festgelegt ist.

14. Fahrwerkssystem nach Anspruch 13,
wobei der lenkerseitige Eingriffsbereich (24, 44) mit einem Kragen (62) der Lenkereinheit (6) in kraftschlüssigen Eingriff bringbar ist,
wobei der Kragen (62) an einem Zwischenelement (63) vorgesehen ist, wobei das Zwischenelement (63) zwischen dem Achsrohr (10) und einem Längslenker (64) der Lenkereinheit (6) angeordnet ist.

15. Fahrwerkssystem nach Anspruch 14,
wobei zumindest eine Verstärkungseinheit (1) derart an dem Verbund aus Achsrohr (10) und Lenkereinheit (6) angeordnet ist, dass die Flanschabschnitte (26, 46) benachbart zu einem Verbindungsabschnitt (66) des Zwischenelements (63) mit dem Achsrohr (10) angeordnet sind.

## Claims

1. Reinforcing unit (1), for usage in a running gear system of a utility vehicle, comprising a first shell element (2) and a second shell element (4),
wherein the first shell element (2) and the second shell element (4) each comprise an engagement region (22, 42) on the tube side and an engagement region (24, 44) on the link side,
wherein the first shell element (2) and the second shell element (4) each comprise a flange portion (26, 46),
wherein between the flange portion (26) of the first shell element (2) and the flange portion (46) of the second shell element (4) a tensile force can be applied, which presses the first and the second shell element (2, 4) against an axle tube (10) in such a manner that the reinforcing unit (1) can be non-positively fixed on the axle tube (10) **characterized by**,
that the engagement region (24, 44) on the link side can be brought into non-positive engagement with a collar (62) of the link unit (6).

2. Reinforcing unit (1) according to Claim 1, wherein the first shell element (2) and the second shell element (4) in the respective engagement region (22, 42) on the tube side are preloaded against the axle tube (10),
wherein the reinforcing unit (1) is secured against displacement relative to the axle tube (10) along an axial direction (A).

3. Reinforcing unit (1) according to any one of the preceding claims, wherein the engagement region (24, 44) on the link side presses the collar (62) against the axle tube (10).

4. Reinforcing unit (1) according to any one of the preceding claims, wherein the connection of the flange portions (26, 46) is detachable, wherein preferably a plurality of bolts (7) is provided in order to establish a tensile force between two flange portions (26, 46) located opposite one another.

5. Reinforcing unit (1) according to any one of the preceding claims, wherein the shell elements (2, 4) in the region of the flange portions (26, 46) have a greater stiffness than in the remaining regions which are in engagement with the axle tube (10) and/or the link unit (6).

6. Reinforcing unit (1) according to any one of the Claims 2 to 5, wherein the engagement region (22. 42) on the tube side has a greater extent along the axial direction (A) than the engagement region (24, 44) on the link side.

7. Reinforcing unit (1) according to any one of the Claims 2 to 6, wherein the extent of the engagement region (22, 42) on the tube side along the axial direction (A) is a multiple, preferentially 3 to 5 times the extent of the engagement region (24, 44) on the link side.

8. Reinforcing unit (1) according to any one of the Claims 2 to 6, wherein the extent of the engagement region (22, 42) on the tube side along the axial direction (A) is 2 to 3.5 times or 4 to 6 times the extent of the engagement region (24, 44) on the link side.

9. Reinforcing unit (1) according to any one of the preceding claims, wherein the engagement region (24, 44) on the link side transversely to the axial direction (A) has a mean radial extent (L) which is greater than the mean radial extent (R) of the engagement region (22, 42) on the tube side transversely to the axial direction (A).

10. Reinforcing unit (1) according to the Claims 3 and 9, wherein the collar (62) has a mean radial extent (K) transversely to the axial direction (A) that is greater than the mean radial extent (L) of the engagement region (24, 44) on the link side in a stress-free state of the reinforcing unit (1).

11. Reinforcing unit (1) according to any one of the preceding claims, wherein the engagement region (22, 42) on the tube side and/or the engagement region (24, 44) on the link side are/is semi-cylindrical in shape.

12. Reinforcing unit (1) according to any one of the preceding claims, wherein the engagement region (24, 44) on the link side has a local irregularity (25, 45), and wherein preferentially in the region of the local irregularity (25, 45) the pressure force exerted by the engagement (24, 44) on the link side on the link unit (6) differs from the mean value of the pressure force over the contact area between engagement (24, 44) on the link side and the link unit (6).

13. Running gear system comprising an axle tube (10) and a link unit (6), wherein the axle tube (10) is fixed on the link unit (6),
wherein on two sides of the link unit (6) in each case a reinforcing unit (1), according to any one of the Claims 1 to 11, is fixed to the connecting region between the axle tube (10) and the link unit (6).

14. Running gear system according to Claim 13, wherein the engagement region (24, 44) on the link side can be brought into non-positive engagement with a collar (62) of the link unit (6),
wherein the collar (62) is provided on an intermediate element (63),
wherein the intermediate element (63) is arranged between the axle tube (10) and a trailing arm (64) of the link unit (6).

15. Running gear system according to Claim 14, wherein at least one reinforcing unit (1) is arranged on the combination of axle tube (10) and link unit (6) in such a manner that the flange portions (26, 46) are arranged adjacent to a connecting portion (66) of the intermediate element (63) with the axle tube (10).

## Revendications

1. Unité de renfort (1) pour l'utilisation dans le système de train de roulement d'un véhicule utilitaire, comportant un premier élément de coque (2) et un second élément de coque (4),
dans laquelle
le premier élément de coque (2) et le second élément de coque (4) présentent chacun une zone d'engagement (22, 42) côté tube et une zone d'engagement (24, 44) côté bras oscillant,
le premier élément de coque (2) et le second élément de coque (4) présentent chacun une portion de bride (26, 46),
une force de traction peut être exercée entre la portion de bride (26) du premier élément de coque (2) et la portion de bride (46) du second élément de coque (4), force qui presse le premier et le second élément de coque (2, 4) contre un tube d'essieu (10) de telle sorte que l'unité de renfort (1) est immobilisable par coopération de forces contre le tube d'essieu (10),
**caractérisée en ce que**
la zone d'engagement (24, 44) côté bras oscillant est susceptible d'être amenée en engagement par coopération de forces avec une collerette (62) de l'unité formant bras oscillant (6).

2. Unité de renfort (1) selon la revendication 1,
dans laquelle
le premier élément de coque (2) et le second élément de coque (4) sont précontraints contre le tube d'essieu (10) dans la zone d'engagement respective côté tube (22, 42),
et l'unité de renfort (1) est bloquée à l'encontre d'un déplacement par rapport au tube d'essieu (10) le long d'une direction axiale (A).

3. Unité de renfort (1) selon l'une des revendications précédentes,
dans laquelle
la zone d'engagement côté bras oscillant (24, 44) presse la collerette (62) contre le tube d'essieu (10).

4. Unité de renfort (1) selon l'une des revendications précédentes,
dans laquelle
la liaison des portions de bride (26, 46) est détachable,
et il est prévu de préférence une multitude de boulons (7) pour établir une force de traction entre deux portions de bride opposées (26, 46).

5. Unité de renfort (1) selon l'une des revendications précédentes,
dans laquelle
dans la zone des portions de bride (26, 46), les éléments de coque (2, 4) présentent une rigidité supérieure à celle dans les autres zones qui sont en engagement avec le tube d'essieu (10) et/ou avec l'unité formant bras oscillant (6).

6. Unité de renfort (1) selon l'une des revendications 2 à 5,
dans laquelle
le long de la direction axiale (A), la zone d'engagement (22, 42) côté tube présente une extension supérieure à celle de la zone d'engagement (24, 44) côté bras oscillant.

7. Unité de renfort (1) selon l'une des revendications 2 à 6,
dans laquelle
le long de la direction axiale (A), l'extension de la zone d'engagement (22, 42) côté tube est un multiple, de préférence 3 à 5 fois l'extension de la zone d'engagement (24, 44) côté bras oscillant.

8. Unité de renfort (1) selon l'une des revendications 2 à 6,
dans laquelle
le long de la direction axiale (A), l'extension de la zone d'engagement (22, 42) côté tube est 2 à 3,5 fois ou 4 à 6 fois l'extension de la zone d'engagement (24, 44) côté bras oscillant.

9. Unité de renfort (1) selon l'une des revendications précédentes,
dans laquelle
transversalement à la direction axiale (A), la zone d'engagement (24, 44) côté bras oscillant présente une extension radiale moyenne (L) qui est supérieure à l'extension radiale moyenne (R) de la zone d'engagement (22, 42) côté tube transversalement à la direction axiale (A).

10. Unité de renfort (1) selon la revendication 9,
dans laquelle
transversalement à la direction axiale (A), la collerette (62) présente une extension radiale moyenne (K) qui est supérieure à l'extension radiale moyenne (L) de la zone d'engagement (24, 44) côté bras oscillant, dans un état sans contrainte de l'unité de renfort (1).

11. Unité de renfort (1) selon l'une des revendications précédentes,
dans laquelle
la zone d'engagement (22, 42) côté tube et/ou la zone d'engagement (24, 44) côté bras oscillant est/sont réalisée(s) en forme de demi-cylindre.

12. Unité de renfort (1) selon l'une des revendications précédentes,
dans laquelle
la zone d'engagement (22, 42) côté bras oscillant présente un défaut de planéité local (25, 45), et
et de préférence dans la zone défaut de planéité local (25, 45), la force de pressage exercée par l'engagement (24, 44) côté bras oscillant sur l'unité formant bras oscillant (6) se distingue de la valeur moyenne de la force de pressage par la surface de contact entre l'engagement (24, 44) côté bras oscillant et l'unité formant bras oscillant (6).

13. Système de train de roulement comportant un tube d'essieu (10) et une unité formant bras oscillant (6), dans lequel le tube d'essieu (10) est immobilisé sur l'unité formant bras oscillant (6),
dans lequel
sur deux côtés de l'unité formant bras oscillant (6), une unité de renfort respective (1) selon l'une des revendications 1 à 11 est immobilisée au niveau de la zone de liaison entre le tube d'essieu (10) et l'unité formant bras oscillant (6).

14. Système de train de roulement selon la revendication 13,
dans lequel
la zone d'engagement (24, 44) côté bras oscillant est susceptible d'être amenée en engagement par coopération de forces avec une collerette (62) de l'unité formant bras oscillant (6),
la collerette (62) est prévue sur un élément intermédiaire (63),
l'élément intermédiaire (63) est agencé entre le tube d'essieu (10) et un bras oscillant longitudinal (64) de l'unité formant bras oscillant (6).

15. Système de train de roulement selon la revendication 14,
dans lequel
au moins une unité de renfort (1) est agencée sur l'ensemble composite constitué par le tube d'essieu (10) et par l'unité formant bras oscillant (6), de telle sorte que les portions de bride (26, 46) sont agencées au voisinage d'une portion de liaison (66) de l'élément intermédiaire (63) avec le tube d'essieu (10).
